Europäisches Patentamt

European Patent Office

Office européen des brevets

(19)

(11) Numéro de publication : **0 080 006**
**B1**

# (12) FASCICULE DE BREVET EUROPÉEN

(45) Date de publication du fascicule du brevet :
28.05.86

(51) Int. Cl.⁴ : **B 23 K 20/06**, G 21 C 3/10

(21) Numéro de dépôt : **82101929.6**

(22) Date de dépôt : **11.03.82**

(54) **Appareillage permettant la soudure de bouchons d'aiguille combustible nucléaire.**

(30) Priorité : 27.03.81 LU 83264

(43) Date de publication de la demande :
01.06.83 Bulletin 83/22

(45) Mention de la délivrance du brevet :
28.05.86 Bulletin 86/22

(84) Etats contractants désignés :
**DE FR GB**

(56) Documents cités :
**EP-A- 0 009 424**
**FR-A- 2 026 246**
**FR-A- 2 321 428**

(73) Titulaire : **COMMUNAUTE EUROPEENNE DE L'ENERGIE ATOMIQUE (EURATOM)**
**Bâtiment Jean Monnet Plateau du Kirchberg Boîte Postale 1907**
**L-1019 Luxembourg (LU)**

(72) Inventeur : **Debeir, René Pierre**
**93, rue des Massoniers**
**Manosque (FR)**

Jouve, 18, rue St-Denis, 75001 Paris, France

## Description

L'objet de la présente invention est de rendre possible la soudure par impact et impulsion électriques des objets longiformes radioactifs sans contact direct avec l'opérateur.

Dans le cas présent, l'objet longiforme est constitué par un bouchon métallique d'aiguille combustible nucléaire ; ledit bouchon doit être soudé à l'extrémité de la gaine de l'aiguille.

Les aiguilles se trouvant dans une zone contaminée où est installée la chaîne de fabrication desdites aiguilles combustibles, l'opération de soudage doit interdire toute contamination à l'extérieur de l'enceinte de travail. Le soudage par télémanipulation n'est pas facile et le temps d'opération qui en résulte est suffisamment long. Il est impensable de faire la soudure par impact et impulsion électriques dans la boîte à gants car l'explosion de la bobine risque d'endommager l'enceinte ; après l'explosion, l'atmosphère serait contaminée par les fumées et il serait long et coûteux de la purifier ; en outre, il y a des règles de sécurité à respecter.

Selon un procédé connu (FR-A-2 026 246) de soudure par bobine explosible, les pièces à souder sont introduites dans une boîte à gants qui est mise sous vide et ensuite remplie du gaz désiré ; les pièces sont ensuite mises en place l'une par rapport à l'autre pour la soudure et introduites ainsi dans un sachet en plastique souple qui est fermé hermétiquement ; on sort le tout de la boîte à gants et on procède à la soudure. Mais ce procédé présente des inconvénients : par exemple, en cas de variation de pression, le sac en plastique sorti de la boîte à gants peut éclater ou bien peut rendre difficile, voire impossible, le positionnement de la bobine explosible et son centrage.

Selon une autre proposition de l'art antérieur (FR-A-2 321 428) de souder par bobine explosible des aiguilles combustibles avec un bouchon, celui-ci, positionné sur l'aiguille, est encapsulé dans une boîte à gants par un capuchon autour duquel est placée la bobine explosible. L'opération de magnétosoudage étant en dehors de la boîte à gants, les aiguilles combustibles doivent sortir de la boîte à gants. Le capuchon explose pendant le soudage et ne peut plus être utilisé. Ce document a servi de base pour l'élaboration du préambule de la revendication 1.

Pour éliminer les inconvénients ci-dessus, l'invention propose un appareillage permettant de réaliser la magnétosoudure par bobine explosive d'objets, tels que des capsules et aiguilles combustibles, en boîte à gants sous atmosphère contrôlée, ladite soudure étant effectuée sans aucun risque de contamination et dans des temps extrêmement courts.

A cet effet, l'appareillage selon l'invention prévoit pour le scellement étanche par magnétosoudage d'un objet longiforme, en particulier, une capsule ou aiguille combustible, avec un bouchon, positionné sur l'objet dans une boîte à gants, avec un propulseur placé autour de l'extrémité de l'objet où le bouchon est positionné, la partie de l'objet munie du bouchon et propulseur étant introduite dans un capuchon pour ensuite procéder à l'opération de magnétosoudage à l'aide de la bobine explosible qui est enfilée sur le capuchon, lequel est un doigt de gant qui est fixé à l'extrémité d'une protubérance montée sur une paroi extérieure de la boîte à gants.

Des modes particuliers de réalisation de l'appareillage selon l'invention sont indiqués dans les revendications 2 à 7.

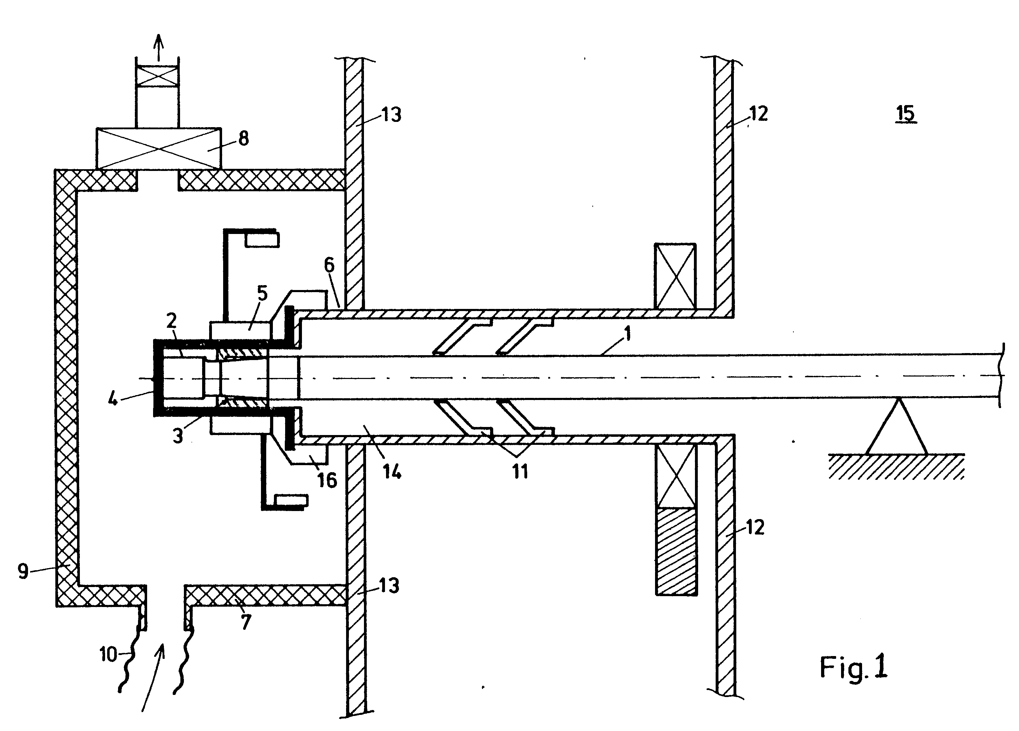

L'invention sera illustrée à l'aide de la figure annexée.

La gaine 1 contenant l'aiguille, munie de son bouchon 2 et de son propulseur 3 est introduite dans le doigt de gant 4 (D. de G.) ; si le D de G est placé à l'extrémité d'une protubérance 6, comme dans le cas illustré, on aura la possibilité d'isoler phoniquement la B à G 15 et l'ensemble de la chaîne de montage qu'elle contient.

La bobine explosive 5, plastifiée, est enfilée sur le D d G 4 fixé sur la protubérance par l'écrou 16. Les positions relatives de l'ensemble gaine, bouchon, propulseur et de la bobine sont fixées grâce à des butées ou à des repères par rapport à un point de référence bien défini, p. e. une des faces de la paroi de la B à G 15.

Le D de G est construit, soit usiné ou monté, dans un matériau résistant à l'onde de choc créée par l'explosion de la bobine 5. Divers matériaux sont utilisables, à condition qu'ils satisfassent aux conditions suivantes : être non conducteurs de l'électricité et amagnétiques ; avoir une bonne résistance aux chocs et aux déchirures ; en général, les matériaux ayant un très grand allongement, donnent satisfaction. Ces matériaux, transparents ou non, naturels ou synthétiques, renforcés ou non par des fibres, doivent résister aux chocs correspondant à un très grand nombre de soudures avant qu'il soit nécessaire de remplacer le D d G.

Ce D d G autour duquel explose la bobine, est placé dans une enceinte ou B à G 7, ventilée et raccordée à des filtres 8 pouvant arrêter une éventuelle contamination de l'air, provoquée par une rupture accidentelle du D d G.

Ladite enceinte 7 considérée comme un prolongement de la B à G 15 est munie d'un capot mobile 9, qui peut être transparent et est pourvue d'un tuyau d'émission d'air 10 pour la purification des gaz développés par l'explosion.

Le propulseur 3 ne doit présenter aucun angle vif contre lequel le D d G risquerait de se blesser.

Les débris du propulseur, par le retrait de l'aiguille soudée sont ramenés dans la B à G 15 faisant partie de la chaîne. Collectés en 14 ils peuvent être décontaminés si nécessaire.

Le corps de l'aiguille est soutenu et maintenu en position, pour l'opération de soudage, par des joints, gonflables par exemple 11, à l'intérieur de la B à G 15.

La B à G avec son capot amovible sert aussi comme isolement phonique pour l'opérateur et le personnel environnant.

Un autre isolement phonique peut être prévu à l'intérieur immédiat de la B à G 15 entre la paroi 12 avec la paroi extérieure 13 de la même B à G 15.

## Revendications

1. Appareillage pour le scellement étanche par magnétosoudage d'un objet longiforme, en particulier une capsule ou aiguille combustible, avec un bouchon, positionné sur l'objet dans une boîte à gants, avec un propulseur (3) placé autour de l'extrémité de l'objet où le bouchon est positionné, la partie de l'objet munie du bouchon et propulseur étant introduite dans un capuchon pour ensuite procéder à l'opération de magnétosoudage à l'aide de la bobine explosible (5) qui est enfilée sur le capuchon, caractérisé en ce que le capuchon est un doigt de gant (4), qui est fixé à l'extrémité d'une protubérance (6), fixée sur une paroi extérieure de la boîte à gants (15).

2. Appareillage selon la revendication 1, caractérisé en ce que la protubérance (6), le doigt de gant (4) et la bobine explosible (5) sont placés dans une enceinte ventilée (7).

3. Appareillage selon la revendication 2 caractérisé en ce que l'enceinte est raccordée à des filtres (8) et pourvue d'un tuyau d'émission d'air (10).

4. Appareillage selon la revendication 2 caractérisé en ce que le propulseur (3) est en matériau bon conducteur d'électricité malléable mais devant, sous le choc, se rompre suivant deux génératrices entaillées préalablement.

5. Appareillage selon la revendication 2 caractérisé en ce que le doigt de gant (4) est constitué en un matériau diélectrique déformable renforcé ou non.

6. Appareillage selon la revendication 5 caractérisé en ce que le doigt de gant (4) est renforcé en fibre de verre, de carbone, etc.

7. Appareillage selon la revendication 2 caractérisé en ce que la bobine explosible (5) est plastifiée.

## Claims

1. Appliance for sealing an oblong object, particularly a fuel capsule or rod, by magnetic welding, with a plug, which is placed on the object in a glove-box, with a driver pushed around the end of the object where the plug is placed, the part of the object provided with the plug and driver being introduced into a cap where the magnetic welding operation is proceeded by an explosive coil (5) wound on the cap, characterized in that the cap is a glove-finger (4) fixed on the end of a protruding part (6) which is mounted on an exterior wall of the glove-box (15).

2. Appliance according to claim 1, characterized in that the protruding part (6), glovefinger (4) and the explosive coil (5) are placed in a ventilated enclosure (7).

3. Appliance according to claim 3, characterized in that the enclosure (7) is connected to filters (8) and provided with an air inlet tube (10).

4. Appliance according to claim 2 characterized in that the driver is of a malleable, electrically well conducting material and may break along two previously notched generating lines.

5. Appliance according to claim 2, characterized in that the glove-finger (4) consists of a deformable di-electric material.

6. Appliance according to claim 4, characterized in that the glove-finger (4) is armed with glass fibre, carbon, etc.

7. Appliance according to claim 2, characterized in that the explosive coil (5) is plastified.

## Patentansprüche

1. Anordnung zur Versieglung durch Magnetoschweissung eines länglichen Gegenstandes, insbes einer kernbrennstoffkapselung, mit einem Zapfen, der in einem Handschuhkasten an den Gegenstand angebracht wird, mit einem Treibelement, das über das Ende des Gegenstandes, wo sich der Zapfen befindet, geschoben wird, wobei weiter der Teil des Gegenstandes, wo sich der Zapfen und das Treibelement befinden, in eine Kappe eingebracht wird, um die Magnetoschweissung mit Hilfe einer auf die Kappe gewickelten Sprengspule (5) durchzuführen, dadurch gekennzeichnet, dass die Kappe als Handschuhfinger (4) ausgebildet ist, der auf dem Ende eines vorspringenden, auf der Aussenwand des Handschuhkasten (15) montierten Teils (6) befestigt ist.

2. Anordnung nach Anspruch 1, dadurch gekennzeichnet, dass sich der vorspringende Teil (6), der Handschuhfinger (4) und die Sprenspule (5) in einem ventilierten Raum befinden.

3. Anordnung nach Anspruch 2, dadurch gekennzeichnet, dass der Raum (7) an Filter (8) gekoppelt ist und mit einem Luftzufuhrrohr (10) versehen ist.

4. Anordnung nach Anspruch 1, dadurch gekennzeichnet, dass das Treibelement aus einem hämmerbaren elektrisch gut leitenden Material besteht und durch die Explosionskraft entlang zweier vorher angebrachter Rillen zerbricht.

5. Anordnung nach Anspruch 1, dadurch gekennzeichnet, dass der Handschuhfinger (4) aus einem dielektrischen, verformbaren, eventuell armierten, Material besteht.

6. Anordnung nach Anspruch 5, dadurch gekennzeichnet, dass der Handschuhfinger (4) mit Glasfasern, Kohlenstoff, usw. armiert ist.

7. Anordnung nach Anspruch 1, dadurch gekennzeichnet, dass die Sprengspule (5) in Kunststoff eingebettet ist.

Fig.1